Europäisches Patentamt

European Patent Office

Office européen des brevets

(19)

(11) Veröffentlichungsnummer: **0 230 002**
**A1**

(12)

# EUROPÄISCHE PATENTANMELDUNG

(21) Anmeldenummer: **86117492.8**

(22) Anmeldetag: **16.12.86**

(51) Int. Cl.⁴: **A 01 N 47/46**
// (A01N47/46, 43:36)

(30) Priorität: **18.12.85 DE 3545368**

(43) Veröffentlichungstag der Anmeldung: **29.07.87**
**Patentblatt 87/31**

(84) Benannte Vertragsstaaten: **AT BE CH DE ES FR GB GR IT LI LU NL SE**

(71) Anmelder: **SCHERING AKTIENGESELLSCHAFT Berlin und Bergkamen,**
**Müllerstrasse 170/178 Postfach 65 03 11,**
**D-1000 Berlin 65 (DE)**

(72) Erfinder: **Pieroh, Ernst-Albrecht, Im Fischgrund 18,**
**D-1000 Berlin 28 (DE)**
Erfinder: **Giles, David, Dr., Budapester Strasse 33,**
**D-1000 Berlin 30 (DE)**
Erfinder: **Fischer, Bernd, Dr., Ginsterweg 8,**
**D-3340 Wolfenbüttel (DE)**

(54) **Mittel mit verbesserter nematozider Wirkung.**

(57)  Es wird ein synergistisch wirkendes Mittel mit nematozider Wirkung auf Basis von Methylisothiocyanat und N-Methylpyrrolidon beschrieben, wobei das Mischungsverhältnis von N-Methylpyrrolidon zu Methylisothiocyanat 10:1 bis 1:10 beträgt.

EP 0 230 002 A1

Die Erfindung betrifft ein verbessertes Mittel mit
nematozider Wirkung auf Basis von Methylisothiocyanat.

Methylisothiocyanat ist seit langem als Bodenentseuchungsmittel bekannt (E.A. Pieroh et al., Anz.
Schädlingskd., 1959 (32) 183). Es besitzt als Bodenfungizid ein breites Wirkungsspektrum. Es ist hochwirksam gegen Nematoden und Bodenpilze.

Zur Anwendung wird Methylisothiocyanat auch wegen seiner
physikalischen Eigenschaften in Lösungen, d.h. in verdünntem Zustand verwendet,wie z.B. in 30 % Allylphenolpolyglukolether und 50 % Xylol als 20 %ige Lösung oder
in 90 % Aceton als 10 %ige Lösung (DE AS 1 032 968).

Des weiteren sind auch synergistisch wirkende Mischungen
von Methylisothiocyanat mit z.B. 1,3-Dichlorpropen und
1,2-Dichlorpropan bekannt (DE AS 1 134 241), die sich
mit Erfolg in der Praxis bewährt haben.

Die bekannten Anwendungsformen von Methylisothiocyanat
haben jedoch den Nachteil, daß die bekannten Synergisten
wie z.B. das Ethylendibromid und Schwefelkohlenstoff
in den Verdacht geraten sind, carninogen zu wirken.

Aufgabe der vorliegenden Erfindung war es, diesen Nachteil zu überwinden.

Es wurde nun gefunden, daß sich die Wirkung von Methylisothiocyanat durch N-Methylpyrrolidon synergistisch verstärken läßt.

0230002

Das Mischungsverhältnis von Methylisothiocyanat und N-Methylpyrrolidon beträgt 1:10 bis 10:1, vorzugsweise 1:3 bis 3:1.

Die synergistische Wirkung wurde durch Prüfung auf nematizide Wirkung durch Einmischen in gleichmäßig verseuchtem Boden (Erdmischtest) von Methylisothiocyanat allein, N-Methylpyrrolidon allein und der Mischung der beiden Komponenten offenbar.

Hierzu wurden 0,5 Liter der mit Nematoden (Meloidogyne incognita) verseuchten Erde in einem Mixgerät eine Minute lang mit der Versuchssubstanz sorgfältig gemischt. Das vorbereitete Substrat wurde in eine Tonschale (Durchmesser 12 cm) gefüllt und 13 Tage bei 20 °C im Gewächshaus aufgestellt (Karenzzeit). Bei Bedarf wurde die Bodenoberfläche befeuchtet.

Je Tonschale (= Versuchsglied) wurden nach Ablauf der Karenzzeit sechs Gurkensamen der Sorte "Sensation" (gebeizt mit Thiram) aufgelegt und für weitere 29 Tage im Gewächshaus bei einer Bodentemperatur von 25 - 27 °C kultiviert.

Danach wurden die Wirtspflanzen mit Wurzelballen aus dem verseuchtem Erdgemisch entfernt und unter laufendem Leitungswasser von anhaftender Erde befreit. Anschließend wurde mittels Zähluhr die Anzahl der Wurzelgallen pro Pflanze im Wasserbad festgestellt und mit dem Befall unbehandelter Kontrollpflanzen verglichen. Die Berechnung der prozentualen Befallsminderung als Kriterium für die Wirkungsbeurteilung wurde nach der Abott'schen Formel vorgenommen.

Das folgende Beispiel zeigt die synergistische Wirkung mit
einer 60 %igen Formulierung von Methylisothiocyanat (MIT)
in verschiedenen Konzentrationen.

| M I T (ppm) | M I T | 60 % | M I T | 60 % |
| | Aceton | 25 % | N-Methylpyrrolidon | 25 % |
| | Solvent Naphta | 5 % | Solvent Naphta | 5 % |
| | Kombinations-emulgator (1,5 % Calciumphenyl-sulfonat und 8,5 % Fett-alkoholpolyglycolether) | 10 % | Kombinations-emulgator (1,5 % Calciumphenyl-sulfonat und 8,5 % Fett-alkoholpolyglycolether) | 10 % |
|---|---|---|---|---|
| 10 | 17 | | 59 | |
| 15 | 80 | | 97 | |
| 20 | 93 | | 96 | |
| 25 | 92 | | 98 | |
| 30 | 97 | | 100 | |

Die nematozide Wirkung von N-Methylpyrrolidon allein ist im
folgenden Beispiel dargestellt.

| N-Methyl-pyrroli-don (ppm) | N-Methyl-pyrrolidon | 85 % | N-Methylpyrrolidon | 100 % |
| | Solvent Naphta | 5 % | | |
| | Kombinations-emulgator (1,5 % Calciumphenyl-sulfonat und 8,5 % Fett-slkoholpolyglycolether) | 10 % | | |
|---|---|---|---|---|
| 500 | 0 | | 2 | |
| 1000 | 0 | | 1 | |

Bei den angegebenen Anteilen handelt es sich um Gew.-%.

Das erfindungsgemäße Mittel kann in der für Pflanzenschutzpräparate üblichen Weise angewendet werden. Als besonders geeignet hat sich die direkte Injektion in den Boden oder die
Applikation in die Furche während des Pflügens erwiesen.
Geeignet ist auch die Applikation auf den Boden mit nachfolgender Abdeckung mit weiterer Erde oder mit einer Abdeckfolie.

Das erfindungsgemäße Mittel kann sowohl als solches aber
auch in verdünnter Form appliziert werden. Zur Verdünnung
sind an sich alle gegenüber MIT inerten Lösungsmittel wie
Wasser, Toluol, Cyclohexanon, Isophoron oder Xylol geeignet.

Eine Verdünnung des Mittels bietet sich deshalb an, um eine
gute Verteilung im Boden zu erreichen. Zweckmäßig kann
auch der Zusatz eines oberflächenaktiven Stoffes wie zum
Beispiel Calciumligninsulfonat, Polyethylenalkylphenylether,
Naphthalinsulfonsäuren und deren Salze, Phenolsulfonsäuren
und deren Salze, Formaldehydkondensate, Fettalkoholsulfate
sowie substituierte Benzolsulfonsäuren und deren Salze sein.

Das erfindungsgemäße Mittel kann mit Erfolg im Gartenbau,
Obst- und Gemüseanbau, im Weinbau, in Plantagen und Baumschulen, wo z.B. Kartoffeln, Tabak, Sojabohne, Erdnüsse,
Tomaten, Zwiebeln und Gurken produziert werden, angewendet
werden.

5

## Patentansprüche

1. Mittel mit nematozider Wirkung auf Basis von Methylisothiocyanat, dadurch gekennzeichnet, daß das Mittel
   N-Methylpyrrolidon enthält.

2. Mittel nach Anspruch 1, dadurch gekennzeichnet, daß
   N-Methylpyrrolidon in einer Menge von 10:1 bis 1:10
   im Gewichtsverhältnis zu Methylisothiocyanat enthalten
   ist.

3. Mittel nach Anspruch 1, dadurch gekennzeichnet, daß
   N-Methylpyrrolidon in einer Menge von 3:1 bis 1:3
   im Gewichtsverhältnis zu Methylisothiocyanat enthalten
   ist.

Europäisches
Patentamt

EUROPÄISCHER RECHERCHENBERICHT

0230002
Nummer der Anmeldung

EP 86 11 7492

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-B-1 134 241 (SCHERING AG) <br> * Insgesamt * | 1-3 | A 01 N 47/46 // <br> (A 01 N 47/46 <br> A 01 N 43:36 ) |
| D,A | DE-B-1 032 968 (SCHERING AG) <br> * Insgesamt * | 1-3 | |
| A | CHEMICAL ABSTRACTS, Band 98, Nr. 1, 3. Januar 1983, Seite 160, Zusammenfassung Nr. 1680g, Columbus, Ohio, US; & JP-A-57 134 402 (HOYA CORP.) 16-08-1982 <br> * Insgesamt * | 1-3 | |
| A | CENTRAL PATENTS INDEX, Basic Abstracts Journal, Teil C, AGDOC, Woche 28, Juli 1983, Zusammenfassung Nr. 707728, London, GB; & JP-A-83 092 603 (SHOWA DENKO K.°.) 30-11-1981 | 1-3 | RECHERCHIERTE SACHGEBIETE (Int. Cl.4) <br><br> A 01 N |

Der vorliegende Recherchenbericht wurde für alle Patentansprüche erstellt.

| Recherchenort | Abschlußdatum der Recherche | Prüfer |
|---|---|---|
| DEN HAAG | 07-04-1987 | FLETCHER A.S. |